# FASCICULE DE BREVET EUROPEEN

(11) **EP 1 436 503 B1**
(45) Date de publication et mention de la délivrance du brevet: **02.12.2009**
(21) Numéro de dépôt: 02798006.9
(22) Date de dépôt: 12.09.2002
(51) Int. Cl.: F02N 11/04, F16F 15/315

(54) **MONTAGE D'UN VOLANT D'UN EMBRAYAGE, PORTANT LE ROTOR D'UNE MACHINE ELECTRIQUE TOURNANTE, SUR LE VILEBREQUIN DU MOTEUR D'UN VEHICULE**
MONTAGE EINES SCHWUNGRADS EINER DEN ROTOR EINER ELEKTRISCHEN ROTATIONSMASCHINE STÜTZENDEN KUPPLUNG AN DER KURBELWELLE EINES FAHRZEUGMOTORS
MOUNTING OF A FLYWHEEL OF A CLUTCH, SUPPORTING THE ROTOR OF A ROTATING ELECTRIC MACHINE, ON THE CRANKSHAFT OF A VEHICLE ENGINE

(30) Priorité: 12.09.2001 FR 0111973
(43) Date de publication de la demande: 14.07.2004
(73) Titulaire: VALEO EQUIPEMENTS ELECTRIQUES MOTEUR, 94017 Créteil Cedex (FR)
(72) Inventeur: TAYLOR, Gordon, Shoreham-by-Sea, West Sussex BN43 5FG (GB); TAUVRON, Fabrice, F-91200 Athis-Mons (FR)
(74) Mandataire: Gamonal, Didier
(86) Numéro de dépôt international: PCT/FR2002/003100
(87) Numéro de publication internationale: WO 2003/023222

(56) Documents cités:
- EP-A- 0 302 118
- FR-A- 2 782 353
- US-A- 5 927 452
- US-B1- 6 253 437

## Description

### Domaine de l'invention

La présente invention se rapporte à un montage d'un volant d'un embrayage, portant le rotor d'une machine électrique tournante, sur le vilebrequin d'un moteur à combustion interne d'un véhicule automobile, tel que décrit dans le document FR-A-2 782 355 (WO00/06897 ).

### Art antérieur

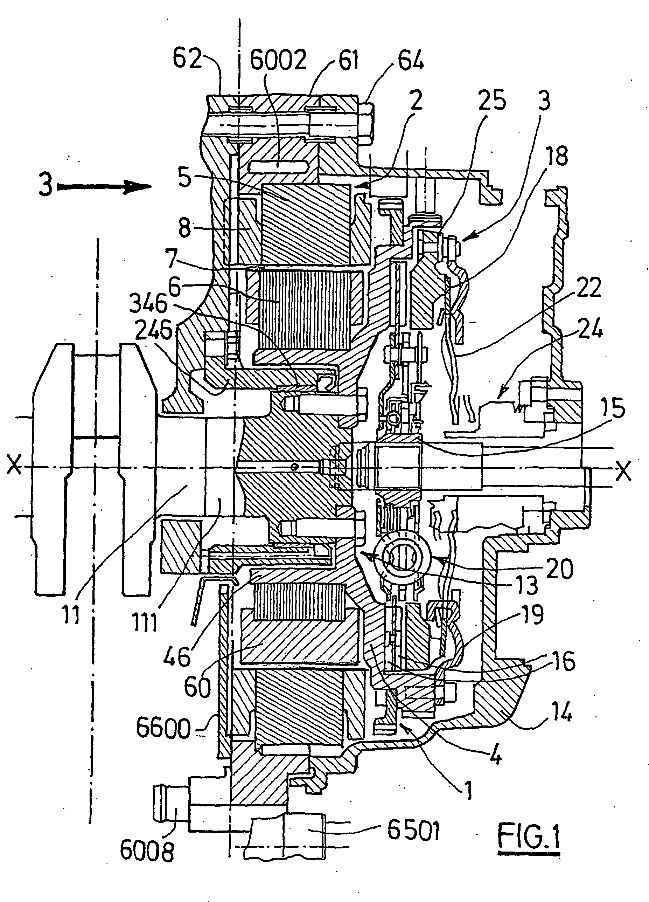

A la figure 1 du document précité on voit que le volant de l'embrayage porte à son extrémité arrière le plateau de réaction d'un embrayage à friction et présente un manchon dirigé vers le carter du moteur à combustion interne, dit moteur, du véhicule automobile. Le manchon porte le rotor d'une machine électrique tournante, qui ainsi est intégrée à l'embrayage. Cette machine comporte, de manière connue, un stator fixe entourant le rotor avec présence d'un entrefer entre la périphérie interne du stator et la périphérie externe du rotor.

L'extrémité avant du manchon, constituant l'extrémité avant du volant, est fixée sur le vilebrequin du moteur.

Le rotor a un poids non négligeable et s'étend, ainsi que le plateau de réaction et l'embrayage, en porte à faux par rapport à l'extrémité avant du manchon.

Le vilebrequin, ainsi qu'on le sait, vibre lorsque le moteur du véhicule fonctionne.

Il en résulte des phénomènes de battements dynamiques nuisibles au niveau de l'entrefer entre le stator et le rotor en sorte que l'entrefer peut varier et doit être dimensionné en conséquence ce qui dégrade les performances de la machine. En outre compte tenu des portes à faux, des inerties et des poids du rotor et de l'embrayage, le vilebrequin et ses paliers sont fortement sollicités, ce qui est néfaste pour la tenue mécanique et la durée de vie du vilebrequin.

Dans le mode de réalisation de la figure 4 de ce document FR-A-2 782 355 on obtient un entrefer constant par l'intermédiaire d'une pièce porteuse.

Cette solution donne satisfaction néanmoins la pièce porteuse augmente l'encombrement. En outre il est fait appel à un roulement à billes de grande taille intervenant radialement entre la pièce porteuse et le volant. Il en est de même dans le mode de réalisation de la figure 1 du document US-A-6,253,437.

### Objet de l'invention

La présente invention a pour objet de pallier ces inconvénients de manière simple et économique.

C'est donc un but de l'invention d'obtenir un entrefer indépendant et insensible à toutes les perturbations liées au fonctionnement du moteur à combustion interne du véhicule, telles que les vibrations les battements dynamiques et les jeux, tout en ménageant le vilebrequin, notamment les paliers de celui-ci.

Selon l'invention un montage d'un volant d'un embrayage, portant le rotor d'une machine électrique tournante, sur le vilebrequin d'un moteur à combustion interne d'un véhicule automobile du type sus-indiqué est **caractérisé en ce que** le carter du moteur du véhicule automobile porte à fixation une douille saillante axialement, en ce que le vilebrequin est prolongé axialement à la faveur d'une rallonge, qui d'une part pénètre à l'intérieur de la douille et d'autre part sert à la fixation du volant de l'embrayage et en ce qu'un moyen de palier intervient radialement entre la rallonge et la douille en étant implanté en dessous du rotor.

Grâce à l'invention la rallonge et la douille sont montées de manière coaxiale en sorte que par l'intermédiaire du moyen de palier la douille fixe est une douille de reprise des efforts, qui pénètre dans l'ouverture centrale du rotor.

Le vilebrequin rallongé est donc bien soutenu et l'entrefer est insensible aux perturbations liées au fonctionnement du moteur du véhicule automobile. On appréciera que l'entrefer est constant et est encore plus réduit, car le volant, fixé sur la rallonge soutenue par le moyen de palier, est également moins sensible aux perturbations liées au fonctionnement du moteur du véhicule automobile. Les performances de la machine sont donc augmentées

Les paliers du vilebrequin sont ménagés du fait de la présence du moyen de palier supplémentaire.

En outre on simplifie le montage car la douille a une forme plus simple que la pièce porteuse, qui dans le document US-A-6,253,437, constitue une entretoise entre le carter du moteur et la cloche de l'embrayage.

Dans une forme de réalisation l'un des paliers du vilebrequin est supprimé et est remplacé par le moyen de palier selon l'invention, qui est implanté au droit du rotor, c'est à dire à l'aplomb du rotor. Pour ce faire la douille pénètre à jeux axial et radial dans une cavité du volant délimitée, d'une part, par une première partie dotée d'une portée d'orientation axiale de montage du rotor, et, d'autre part, par une deuxième partie de fixation du volant sur la rallonge.

La solution permet de réduire l'encombrement entre le carter du moteur et le plateau de réaction sans nuire aux performances de la machine.

En outre le moyen de palier a radialement une faible taille du fait qu'il est en contact avec la rallonge du vilebrequin. Il est donc économique. Ce moyen de palier peut avoir la longueur axiale souhaitée.

La suppression de la pièce porteuse de l'art antérieur rend la solution économique. En outre aucun usinage supplémentaire du volant n'est à prévoir.

La réduction de l'encombrement permet de doter l'embrayage à friction d'un dispositif de rattrapage d'usure permettant de compenser les usures des garnitures de friction et de maintenir les moyens embrayeurs de l'embrayage, tels qu'un diaphragme, toujours dans la même positon lorsque l'embraye est engagé (garnitures de friction serrées entre les plateaux de pression et de réaction de l'embrayage). Il est possible de doter l'embrayage d'autres fonctions.

De même on peut, du fait de l'absence de la pièce porteuse, augmenter les épaisseurs axiales du rotor et du stator au bénéfice de meilleurs performances de la machine.

Usuellement des cibles sont prévues pour mesurer la vitesse de rotation du moteur et pour régler l'allumage du moteur Ces cibles sont par exemple portées par le volant, notamment par le plateau de réaction. Il en résulte une meilleure précision dans les mesures du fait que le volant est également insensible aux perturbations engendrées par le moteur.

Le moyen de palier est dans une variante un roulement à billes à une ou deux rangées de billes.

En variante pour réduire l'encombrement diamétral du moyen de palier et de la douille ainsi que l'encombrement radial de la machine, le moyen de palier consiste en un roulement à aiguilles ou avantageusement en un coussinet ou d'une manière générale en un palier lisse, par exemple en matière plastique doté de charges de renforts et/ou de lubrification, plus économique.

Avantageusement le moyen de palier est lubrifié et consiste dans une forme de réalisation en un coussinet lubrifié par l'huile du moteur du véhicule.

Dans ce cas la douille de reprise des efforts présente au moins un canal de retour au carter d'huile et le vilebrequin des canaux d'arrivée pour alimenter en huile le coussinet.

Un joint d'étanchéité, tel qu'un joint à lèvres, intervient alors entre la périphérie interne de la douille et la périphérie externe de la rallonge.

Cette rallonge présente localement au niveau du moyen de palier une portion saillante radialement, donc de plus grand diamètre, permettant de fixer également le volant d'embrayage.

La portion saillante constitue dans une forme de réalisation l'extrémité libre du vilebrequin et présente un nez pour le centrage du volant d'embrayage.

Dans une forme de réalisation la première partie du volant consiste en un manchon d'orientation axiale et la deuxième partie en un anneau d'orientation transversale.

Bien entendu en variante le manchon est dans une forme de réalisation nervuré. La première partie n'est pas forcément en forme de manchon puisque l'on gagne radialement de la place.

### Brève description des dessins

La description en annexe illustre l'invention en regard des dessins annexés dans lesquels :
- la figure 1 est une vue en coupe axiale du montage selon l'invention ;
- la figure 2 est une vue partielle à plus grande échelle de la partie centrale de la figure 1 ;
- la figure 3 est une vue selon la flèche 3 de la figure 1 sans le carter du moteur, sans le vilebrequin et sans la douille.

### Description de modes de réalisation préférentiels de l'invention

Dans les figures les éléments communs avec ceux du document FR-A-2 782 355 seront affectés des même signes de référence en sorte que pour plus de précisions on se reportera à ce document.

Ainsi dans la figure 1 on voit en 1 un ensemble de coupure et de démarrage d'un moteur à combustion interne de véhicule automobile.

Cet ensemble 1 est intercalé axialement entre le moteur du véhicule et la boîte de transmission de mouvement, telle qu'une boîte de vitesses à commande manuelle ou robotisée, du véhicule automobile. Ici la boîte de transmission est une boîte de vitesses comportant un carter présentant à l'avant des parties creuses pour notamment formation d'une cloche d'embrayage 14 et formation d'un passage pour un arbre de transmission 6501 entre les roues du véhicule. L'arbre 6501 est implanté au voisinage de la cloche d'embrayage 14.

Cet ensemble 1 comporte un embrayage à friction 3 et une machine électrique tournante 2 ici du type asynchrone. Cette machine comporte un stator 5 entourant un rotor 6. Le stator et le rotor présentent de manière connue un corps ou noyau sous la forme d'un paquet de tôles. Le corps du rotor est conformé pour le montage d'une cage d'écureuil 60, tandis que le corps du stator comporte des rainures, par exemple semi-fermées, pour le montage de conducteurs électriques agencés pour former les bobinages d'induit 8 de la machine. Ces conducteurs appartiennent à des bobinages classiques en fil bobiné ou consistent en des barres par exemple en des épingles en forme de U dont les extrémités des branches sont soudées pour former au moins un enroulement par phase comme visible dans le document US-A-2 928 963 ou dans le document WO 92/06527 ; la machine étant du type polyphasé.

Par exemple la machine est du type triphasé avec des bobinages connectés en étoile. En variante comme explicité dans le document US-A-2 928 963 le nombre de phases est supérieur à 3.

Dans tous les cas, les fils conducteurs ou les épingles conductrices traversent le corps du stator à la faveur des rainures de celui-ci et s'étendent à l'extérieur du corps du stator pour former en saillie axiale un premier et un deuxième chignon de manière connue.

L'embrayage à fiction 3 comporte un plateau de réaction 4 en matière moulable, ici en fonte, appartenant à un volant d'entraînement 13 de forme annulaire, constituant le volant de l'embrayage, qui suivant une caractéristique de l'invention a une forme simplifiée par rapport à celui du document FR-A-2 782 355.

Le stator 5 de la machine électrique tournante est porté intérieurement par une entretoise 61 dotée intérieurement d'une chambre de refroidissement 6002 pour la circulation d'un fluide caloporteur, tel que le liquide de refroidissement du moteur du véhicule, permettant d'évacuer la chaleur et de refroidir le stator.

Cette entretoise 61 est implantée à la périphérie externe de la cloche 14 en étant interposée axialement entre le carter 62 du moteur du véhicule automobile et la cloche d'embrayage 14 solidaire de la boîte de transmission de mouvement, dont on voit en 12 l'arbre d'entrée constituant un arbre mené. Le moteur comporte un arbre menant sous la forme d'un vilebrequin, dont la sortie constitue un arbre 11. Cette sortie sera nommée par simplicité arbre. L'axe axial de symétrie de l'arbre 11 est aligné avec celui de l'arbre 12, en sorte qu'il est constitué un axe de symétrie axiale X-X constituant l'axe de rotation des arbres 11, 12 de l'embrayage 3 et du rotor 6 de manière décrite ci-après.

La cloche 14 entoure le plateau de réaction 4. Des vis 64 assurent la fixation de l'entretoise 61 et de la cloche au carter 62 du moteur du véhicule. Ces vis présentent une tête prenant appui sur un rebord radial, que présente la cloche 14 à son extrémité libre. Les vis traversent le rebord de la cloche et l'entretoise pour se visser dans des taraudages du carter 62 et serrer l'entretoise. La chambre de refroidissement 6002 de l'entretoise 61 est en forme de canal à l'intérieur duquel circule un fluide caloporteur comme décrit dans le mode de réalisation de la figure 14 du document FR-A-2 782 355 auquel on se reportera.

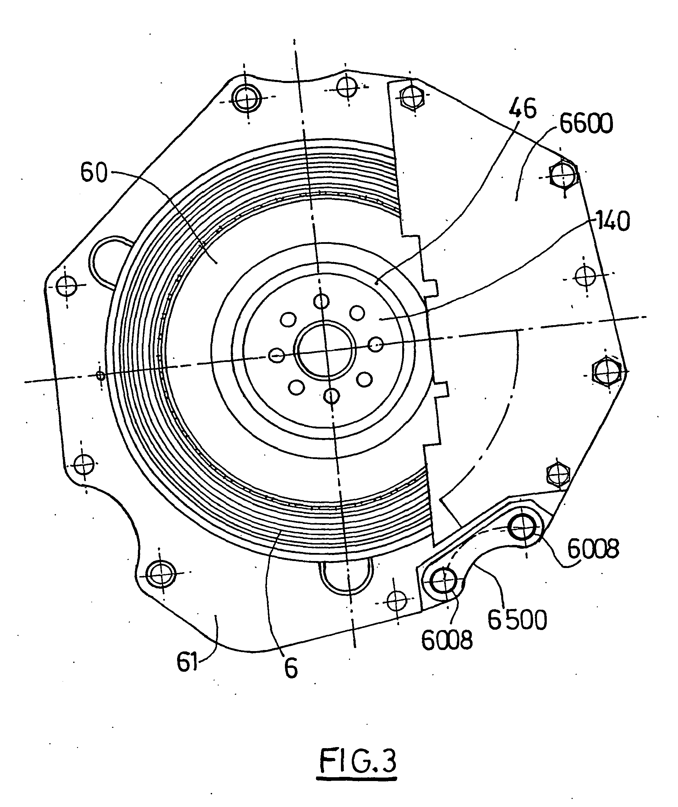

Suivant une caractéristique (figure 3) les conduits 6008 d'entrée et de sortie du fluide caloporteur sont disposés aux extrémités circonférentielles d'un évidement 6500 pour le passage de l'arbre de transmission 6501 entre les roues du véhicule automobile en sorte que l'entretoise est pleine à cet endroit.

L'évidement 6500 a un contour en forme d'arc de cercle. Bien entendu toute autre forme est envisageable ; l'entretoise étant creusée à cet endroit. Cette disposition permet d'augmenter le diamètre extérieur du stator 5 par interruption locale de la chambre 6002 à cet endroit ; les conduits 6008 étant disposés de part et d'autre de l'évidement 6500.

L'entretoise 61, le stator 5 et le rotor 6 sont de forme annulaire en étant montés de manière coaxiale.

Un entrefer 7 précis et constant existe entre la périphérie interne du stator 5 et la périphérie externe du rotor 6 porté par le volant 13 en sorte que la machine électrique tournante 2 est intégrée à l'embrayage à friction 3.

Cette machine 2 est interposée entre le carter 62 du moteur du véhicule et le plateau de réaction 4.

Le volant 13 comporte une première partie sous la forme d'un manchon 46, d'orientation axiale, dirigé axialement ver le carter 62.

La périphérie externe du manchon 46 constitue une portée de montage d'orientation axiale pour le rotor 6, ici monté par frettage sur la dite portée. A cet effet la périphérie externe du manchon 46 présente un épaulement à son extrémité axiale la plus éloignée du carter 62 du moteur du véhicule.

Ce manchon 46 est d'un seul tenant avec le plateau de réaction 4 en étant venue de moulage avec celui-ci.

Ce volant 13 présente centralement à sa périphérie interne une deuxième partie d'orientation transversale sous la forme d'un anneau de fixation 140 doté de trous pour le passage d'organes de fixation 245 du volant 13 à l'arbre 11, du vilebrequin. L'anneau 140 se raccorde par l'intermédiaire d'une portion tronconique 142 à la périphérie interne du plateau de réaction 4, qui ainsi est décalé axialement par rapport à l'anneau 140 et ce en direction opposée au carter 62.

Le manchon 46 se raccorde à la périphérie externe de l'anneau 140 et s'étend en saillie axiale par rapport à l'anneau 140 s'étendant perpendiculairement à l'axe X-X. Le manchon 46 est dirigé axialement vers le carter 62 et se raccorde à la portion tronconique 142 en sorte qu'un jeu axial existe entre le rotor 6 et le plateau de réaction 4. Un jeu axial existe bien entendue entre le rotor 6 et le carter 62.

Le volant d'embrayage 13 est d'un seul tenant ; ses parties 140, 142, 4, 46 étant obtenues par moulage. On notera que le volant 13 a une configuration similaire à celle de la figure 4 du document FR A 2 782 355. Néanmoins on remarquera que le manchon 46 de la figure 1 de la présente demande peut s'étendre jusqu'au voisinage du carter 62 et que la périphérie interne du manchon 46 n'est pas usinée. On peut ainsi augmenter la longueur axiale du rotor et du stator de la machine et donc la puissance de celle-ci

En outre le diamètre externe du manchon 46 de la figure 1 est inférieur au diamètre externe du manchon du document précité, en sorte que l'encombrement diamétral de la machine 2 est réduit.

De plus la portion tronconique 142 est moins inclinée axialement que celle du document précité en sorte que la distance axiale entre l'anneau 140 et le plateau 4 est réduite.

On appréciera également l'absence d'une pièce porteuse et d'un roulement de grande taille, donc cher, agissant entre la pièce porteuse et le manchon 46.

La suppression de la pièce porteuse permet de réduire l'encombrement axial entre le carter 62 et le plateau 4

La solution est donc simple et économique, tout en permettant de réduire l'encombrement axial et radial entre le carter 62 et le plateau de réaction 4 et cela tout en ayant une machine plus performante.

Cela est obtenu grâce au montage du volant d'embrayage 13, portant le rotor 6, sur l'arbre 11 du vilebrequin selon l'invention.

Plus précisément l'arbre 11 est plus long axialement et présente donc une rallonge axiale 111 dirigée vers le plateau de réaction 4. Cette rallonge 111 constitue l'extrémité libre du vilebrequin du moteur à combustion interne du véhicule automobile. Le volant 13 est fixé en bout de la rallonge 111 par l'intermédiaire de son anneau 140.

Le carter 62 porte à fixation une douille cylindrique 246, dirigée axialement vers le plateau de réaction 4 et entourant au moins en partie la rallonge 111, ici de forme cylindrique. La douille 246 présente à son extrémité axiale adjacente au carter une collerette 247 d'orientation transversale s'étendant vers l'extérieur en direction opposée à l'axe X-X. La collerette 247 est trouée pour fixation de la douille sur le carter 62 à l'aide de vis 248. En variante la douille 246 est d'un seul tenant avec le carter. Il en est de même de l'entretoise 61, qui peut être d'un seul tenant avec le carter 62 ou la cloche 14.

Un moyen de palier 346 intervient radialement entre la périphérie interne de la douille 246 et la périphérie externe de la rallonge 111. Ce moyen de palier 346 est implanté radialement en dessous du rotor 6 et du manchon 46. La douille pénètre à jeu radial et axial dans la cavité délimitée par le manchon 46 et l'anneau 140. Ce moyen de palier 346 est implanté à l'aplomb du rotor 6. La ligne transversale qui passe par le centre de gravité de l'ensemble rotor 6 - manchon 46 passe par le moyen de palier 346. Avantageusement dans la forme de réalisation représentée le plan de symétrie radial du rotor 6, s'étendant perpendiculairement à l'axe X-X et passant par le milieu du rotor, est confondu avec le plan de symétrie radial du moyen de palier 346.

Ainsi l'invention est **caractérisée en ce que** le carter 62 du moteur du véhicule automobile porte à fixation une douille 246 saillante axialement, en ce que le vilebrequin 11 est prolongé axialement par l'intermédiaire d'une rallonge 111, qui, d'une part, pénètre à l'intérieur de la douille 246 et, d'autre part, sert à la fixation du volant 13 de l'embrayage et en ce qu'un moyen de palier 346 intervient radialement entre la rallonge 111 et la douille 246 en étant implanté en dessous du rotor 6.

Grâce à ces caractéristiques on obtient un entrefer 7 précis et le plus petit possible, ainsi qu'une meilleure tenue mécanique du vilebrequin grâce à la douille et au moyen de palier en contact avec la rallonge 111. Les performances de la machine 2 sont augmentées.

Le moyen de palier 346 supplémentaire soulage les paliers du vilebrequin.

Dans la forme de réalisation de la figure 1 le moyen de palier 346 remplace l'un des paliers du vilebrequin.

Dans tous les cas il a la longueur axiale souhaitée.

Ici le moyen de palier 346 est axialement moins long que le rotor 6.

La rallonge 111 présente localement au niveau du moyen de palier 346, ici en forme de coussinet, une portion 211 saillante radialement. Dans les figures la portion 211 est de forme cylindrique et le coussinet 346 de forme tubulaire

La portion saillante 211 constitue l'extrémité libre du vilebrequin 11 et présente un nez 311 pour le centrage du volant 13. Le nez 311 est de forme cylindrique. Il a un diamètre externe qui correspond au diamètre interne de l'anneau 140 en sorte que lesdites périphéries sont en contact intime pour centrage de l'anneau 140 par le nez 311 de plus petit diamètre externe que celui de la portion 211. Il y a ainsi formation d'un épaulement transversal pour l'appui de l'anneau 140. Cet épaulement est constitué par la face d'extrémité axiale de la portion 211.

Le volant 13 est ici fixé sur la portion saillante 211 en bout de celle-ci, ici à l'aide de vis 245 dont les têtes prennent appui sur l'anneau central 140 du volant. La partie filetée de chaque vis 245 traverse l'anneau 140, troué à cet effet, pour se visser dans chacune dans un taraudage de la portion 211 et serrer l'anneau 140 au contact de la face d'extrémité axiale de la portion 211. Bien entendu à la place de vis 245 on peut faire appel à des goujons et des écrous ou à tout autre organe de fixation. 4.

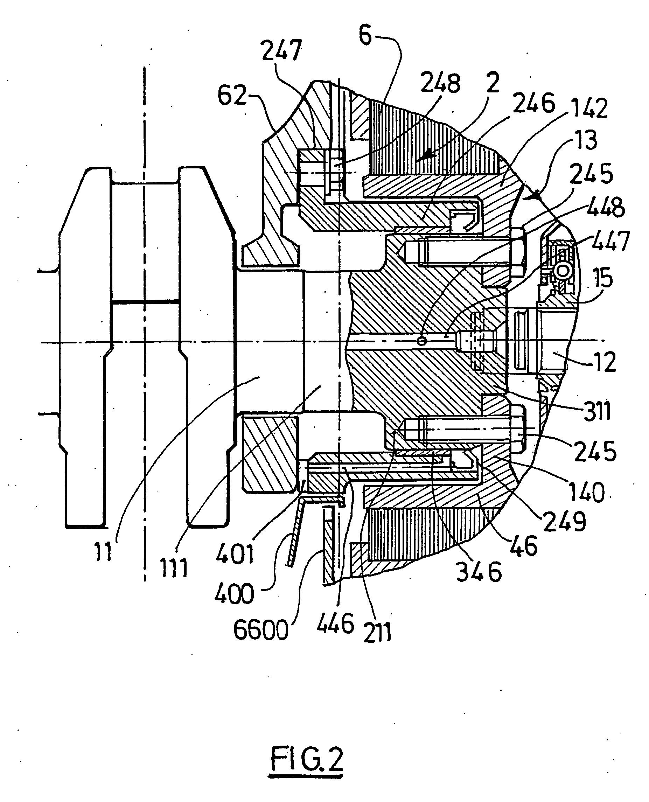

Le coussinet 346 est lubrifié par l'huile de lubrification du moteur du véhicule comme mieux visible à la figure 2. Pour ce faire le vilebrequin 11 présente dans son épaisseur centralement un canal axial 447 d'amenée d'huile dans le quel débouchent des canaux radiaux 448 répartis de manière régulière, pour alimenter en huile du moteur le coussinet 346. Les canaux 448 débouchent radialement au niveau du coussinet 346 dans la portion médiane de ceux-ci. Le coussinet est monté à l'intérieur de la douille à la faveur d'une première augmentation de diamètre que présente intérieurement la douille au niveau de la périphérie externe de la portion 211.

Le canal 447 est obturé par un bouchon non référencé. Les canaux 447, 448 sont donc des canaux d'arrivée d'huile.

L'huile peut se diriger vers l'anneau 140 en sorte qu'il faut prévoir un joint d'étanchéité 249, ici un joint à lèvre. Ce joint 249 est en contact avec la périphérie externe de la portion 211 et est en contact avec la périphérie interne de la douille 246 présentant à cet effet à son extrémité libre une deuxième augmentation de diamètre. La douille présente donc intérieurement trois diamètres.

La douille 246 présente, en partie basse, dans son épaisseur au mois un canal axial 446 de retour de l'huile au carter d'huile 400. Le ou les canaux 446 traversent axialement la douille pour déboucher, d'une part, au niveau du joint 249 et, d'autre part, dans le carter 400 situé dans la partie basse du moteur avec formation d'un passage transversal 401 entre le carter 62 et la collerette 247.

Une plaque 6600 est fixée sur l'entretoise 61 comme visible à la figure 3. Cette plaque est implantée en regard du carter d'huile pour protéger le rotor et le stator contre les projections.

Bien entendu on prévoit un détrompeur pour monter angulairement la douille et son canal 446 dans la bonne position (canal 446 en position basse). Par exemple la collerette 247 de la douille présente un trou de réception d'une goupille portée par le carter 62.

La machine 2 a plusieurs fonction. Elle constitue un générateur de courant en forme d'alternateur pour les consommateurs du véhicule et également un démarreur pour le véhicule. Elle permet d'arrêter le moteur du véhicule au feu rouge et de le redémarrer ensuite.

Toutes les fonctions de la machine sont décrites par exemple dans les documents FR A 2 782 355 et WO 98/05882 auxquels on pourra se reporter.

Pour mémoire on rappellera que les sorties des bobinages d'induit 8 sont reliées à un module électronique de commande et de contrôle. Par exemple ce module est implanté à l'extérieur du montage selon l'invention et comme décrit dans le document FR-A-2 782 353 l'entretoise 61 porte un connecteur relié d'une part, aux sorties des phases des bobinages d'induit et, d'autre part, par des câbles au module électronique de commande et de contrôle.

L'embrayage à friction 3 à la structure de celui décrit à la figure 3 du document FR A 2 782 355 auquel on se reportera.

Ainsi l'embrayage 3 est donc du type à diaphragme 18,22 prenant appui sur un cordon d'un couvercle 19 fixé à la périphérie externe du plateau de réaction. Le couvercle présente, par découpe et pliage, des pattes traversant axialement les orifices du diaphragme pour être pliées radialement vers l'extérieur pour formation d'un coude de calage pour une couronne jonc offrant un appui secondaire au diaphragme. Un plateau de pression 17 est lié en rotation au couvercle 19 par des languettes tangentielles 25 autorisant un mouvement axial du plateau de pression 17, qui présente un bossage pour l'appui de la périphérie externe de la rondelle Belleville 18 du diaphragme. Un disque de friction 20 présente à sa périphérie externe des garnitures de friction 16 destinées à être serrées entre les plateaux de pression 17 et de réaction 4 présentant chacun à cet effet une face de friction pour la garniture 16 concernée. Les garnitures 16 sont solidaires d'un support relié, de manière rigide ou de préférence de manière élastique par l'intermédiaire d'un amortisseur de torsion, à un moyeu 15 cannelé intérieurement pour sa liaison en rotation avec l'arbre 12 présentant des cannelures complémentaires à celles du moyeu 15.

L'embrayage est donc normalement engagé en sorte que le couple est transmis entre les arbres 11 et 12. Pour désengager l'embrayage on appui sur les extrémités interne des doigts 22 du diaphragme, ici en poussant à l'aide d'une butée de débrayage 24, pour faire pivoter le diaphragme autour de la couronne jonc et faire cesser l'action de la rondelle Belleville 18 du diaphragme sur le plateau afin de libérer les garnitures 16 et désengager l'embrayage 3. Dans cette position le couple n'est plus transmis de l'arbre 11 à l'arbre 12. L'embrayage est donc un organe de coupure et de démarrage.

La butée 24 est du type à commande hydraulique concentrique à l'arbre 12 ; la dite commande comportant un tube de guidage fixé au fond de la cloche et servant de guide à un piston portant un roulement à billes dont l'une des bagues est propre à agir sur les doigts 22.

Bien entendu elle est en variante pilotée électroniquement ou par une fourchette de débrayage. Outre les variantes décrites dans le document FR A 2 782 355 sont envisageables. Il en est de même en ce qui concerne la machine électrique 2.

On notera que le plateau de réaction 4 présente à sa périphérie externe un rebord annulaire d'orientation axiale entourant le plateau de réaction 17 et présentant une cible dentée pour mesurer à l'aide d'un capteur la vitesse de rotation du moteur.

Ce rebord est raccordé par l'intermédiaire d'un épaulement annulaire transversal à un deuxième rebord annulaire d'orientation axiale entourant les garnitures 16 et se raccordant à la périphérie externe du plateau de réaction 4. L'épaulement sert à la fixation d'une pièce adjacente au stator 5 et servant de cible d'allumage pour régler l'allumage du moteur du véhicule. A la figure 1 on a représenté les capteurs associés à ces cibles dont la lecture est précise grâce à l'invention rendant le volant insensible aux perturbations engendrées par le fonctionnement du moteur du véhicule.

Dans les figures la rallonge 111 est monobloc avec le vilebrequin. En variante elle est rapportée en bout du vilebrequin par exemple par vissage. Il en est de même du manchon 46, qui en variante est rapporté à fixation par vissage ou rivetage sur le volant.

On appréciera que le vilebrequin, du fait de l'implantation du moyen de palier 346 est ménagé par rapport à une solution du type décrit dans le document EP-0-302 118 puisque, d'une part, le moyen de palier 346 est plus proche du volant moteur et, d'autre part, qu'il est prévu une douille 246 de reprise des efforts. Les porte-à-faux sont réduits.

## Revendications

1. Montage d'un volant (13) d'un embrayage (3), portant le rotor (6) d'une machine électrique tournante (2), sur le vilebrequin (11) d'un moteur à combustion interne d'un véhicule automobile doté d'un carter (62), **caractérisée en ce que** le carter (62) du moteur du véhicule automobile porte à fixation une douille (246) saillante axialement, **en ce que** le vilebrequin (11) est prolongé axialement à la faveur d'une rallonge (111), qui d'une part pénètre à l'intérieur de la douille (246) et d'autre part sert à la fixation du volant (13) de l'embrayage et **en ce qu'**un moyen de palier (346) intervient radialement entre la rallonge (111) et la douille (246) en étant implanté en dessous du rotor (6).

2. Montage selon la revendication 1, **caractérisé en ce que** le moyen de palier (346) est lubrifié.

3. Montage selon la revendication 1, **caractérisé en ce que** le moyen de palier (346) consiste en un roulement à billes à une ou deux rangées de billes.

4. Montage selon la revendication 1, **caractérisé en ce que** le moyen de palier (346) consiste en un palier lisse.

5. Montage selon la revendication 4, **caractérisé en ce que** le palier lisse consiste en coussinet lubrifié par l'huile du moteur du véhicule automobile.

6. Montage selon la revendication 5, **caractérisé en ce que** le vilebrequin (11) présente des canaux d'arrivée (447,448) et la douille (246) un canal (446) de retour pour alimenter en huile du moteur le coussinet (346).

7. Montage selon la revendication 1, **caractérisé en ce que** la rallonge (111) présente localement au niveau du moyen de palier(346) une portion (211) saillante radialement.

8. Montage selon la revendication 7, **caractérisé en ce que** la portion saillante (211) constitue l'extrémité libre du vilebrequin (11) et présente un nez (311) pour le centrage du volant d'embrayage.

9. Montage selon la revendication 7, **caractérisé en ce que** le volant (13), équipé du rotor (6) de la machine électrique tournante (2),est fixé sur la portion saillante (211) en bout de celle-ci.

10. Montage selon la revendication 1, **caractérisé en ce que** la douille (246) pénètre à jeux dans une cavité du volant (13) délimitée par une première partie (46) présentant une portée d'orientation axiale pour le montage du rotor (6) de la machine électrique tournante (2) et par une deuxième partie de fixation du volant sur la rallonge (111).

## Claims

1. Flywheel assembly (13) for a clutch (3), which supports the rotor (6) of a rotary electric machine (2), on the crankshaft (11) of an internal combustion engine of a motor vehicle which is provided with a housing (62), **characterised in that** the housing (62) of the motor vehicle has secured onto it a bush (246) which projects axially, **in that** the crankshaft (11) is extended axially in the form of an extension (111), which firstly penetrates in the interior of the bush (246), and secondly secures the flywheel (13) of the clutch, and **in that** a bearing means (346) acts radially between the extension (111) and the bush (246), whilst being fitted below the rotor (6).

2. Assembly according to claim 1, **characterised in that** the bearing means (346) is lubricated.

3. Assembly according to claim 1, **characterised in that** the bearing means (346) consists of a ball bearing with one or two rows of balls.

4. Assembly according to claim 1, **characterised in that** the bearing means (346) consists of a smooth bearing.

5. Assembly according to claim 4, **characterised in that** the smooth bearing consists of a bearing which is lubricated by the oil of the motor vehicle engine.

6. Assembly according to claim 5, **characterised in that** the crankshaft (11) has intake channels (447, 448) and the bush (246) has a return channel (446) to supply the bearing (346) with engine oil.

7. Assembly according to claim 1, **characterised in that** the extension (111) has locally at the level of the bearing means (346) a portion (211) which projects radially.

8. Assembly according to claim 7, **characterised in that** the projecting portion (211) constitutes the free end of the crankshaft (11), and has a nose (311) for centring of the clutch flywheel.

9. Assembly according to claim 7, **characterised in that** the flywheel (13) which is equipped with the rotor (6) of the rotary electric machine (2) is secured to the projecting portion (211) at the end of the latter.

10. Assembly according to claim 1, **characterised in that** the bush (246) penetrates with play in a cavity in the flywheel (13), which cavity is delimited by a first part (46) which has a bearing surface with axial orientation for fitting of the rotor (6) of the rotary electric machine (2), and by a second part for securing of the flywheel on the extension (111).

## Patentansprüche

1. Anordnung eines Schwungrads (13) einer Kupplung (3), das den Rotor (6) einer rotierenden elektrischen Maschine (2) trägt, an der Kurbelwelle (11) eines Verbrennungsmotors eines Kraftfahrzeugs, der mit einem Gehäuse (62) versehen ist, **dadurch gekennzeichnet, dass** das Gehäuse (62) des Motors des Kraftfahrzeugs eine an ihm befestigte axial vorstehende Hülse (246) trägt, **dass** die Kurbelwelle (11) durch eine Verlängerung (111) axial verlängert wird, die einerseits in das Innere der Hülse (246) eingreift und andererseits zur Befestigung des Schwungrades (13) der Kupplung dient, und **dass** seien Lagermittel (346) radial zwischen der Verengerung (111) und der Hülse (246) zum Einsatz kommt, wobei es unterhalb des Rotors (6) angeordnet ist.

2. Anordnung nach Anspruch 1, **dadurch gekennzeichnet, dass** das Lagermittel (346) geschmiert wird.

3. Anordnung nach Anspruch 1, **dadurch gekennzeichnet, dass** das Lagermittel (346) aus einem Kugellager mit einer oder zwei Kugelreihen besteht.

4. Anordnung nach Anspruch 1, **dadurch gekennzeichnet, dass** das Lagermittel (346) aus einem Gleitlager besteht.

5. Anordnung nach Anspruch 4, **dadurch gekennzeichnet, dass** das Gleitlager aus einem durch das Öl des Verbrennungsmotors des Kraftfahrzeugs geschmierten Lager besteht.

6. Anordnung nach Anspruch 5, **dadurch gekennzeichnet, dass** die Kurbelwelle (11) Zuieitungskanäle (447, 448) und die Hülse (246) einen Rückleitungskanal für die Versorgung des Lagers (346) mit Motoröl aufweist.

7. Anordnung nach Anspruch 1, **dadurch gekennzeichnet, dass** die Verlängerung (111) im Bereich des Lagermittels (346) örtlich einen radial vorstehenden Abschnitt (211) aufweist.

8. Anordnung nach Anspruch 7, **dadurch gekennzeichnet, dass** der vorstehende Abschnitt (211) das freie Ende der Kurbelwelle (11) bindet und eine Nase (311) für die Zentrierung des Kupp!ungsschwungrads aufweist.

9. Anordnung nach Anspruch 7, **dadurch gekennzeichnet, dass** das mit dem Rotor (6) der rotierenden elektrischen Maschine (2) versehene Schwungrad (13) an dem vorstehenden Abschnitt (211) endseitig befestigt ist.

10. Anordnung nach Anspruch 1, **dadurch gekennzeichnet, dass** die Hülse (246) mit Spiel in eine Ausnehmung des Schwungrads (13) eingreift, die durch einen ersten Teil (46), der eine axial ausgerichtete Auflagefläche für die Anordnung des Rotors (6) der rotierenden elektrischen Maschine (2) aufweist, und durch einen zweiten Teil zur Befestigung des Schwungrads an der Verlängerung (111) begrenzt wird.
